# EUROPEAN PATENT APPLICATION

(11) **EP 3 962 132 A2**
(43) Date of publication of application: **02.03.2022**
(21) Application number: 21193593.7
(22) Date of filing: 27.08.2021
(51) Int. Cl.: H04W 12/02, H04W 12/122, H04W 4/40

(54) **PROCESSING METHOD OF AN INTELLIGENT TRANSPORT SYSTEM**

(30) Priority: 28.08.2020 GB 202013566
(71) Applicant: Canon Research Centre France, 35510 Cesson-Sévigné (FR)
(72) Inventor: SEVIN, Julien, 35140 Saint Aubin du Cormier (FR); NASSOR, Eric, 35235 Thorigné-Fouillard (FR)
(74) Representative: Santarelli

(57) **Abstract**

There is provided a processing method of an Intelligent Transport System, ITS, comprising transmitting and receiving ITS stations, the method comprising, at a receiving ITS station:
determining that a first transmitting ITS station associated with a first identifier is located at a first location;
receiving a message indicating that a second transmitting ITS station associated with a second identifier is located at the first location;
and if, during a limited period of time, the receiving ITS station further receives at least one other message identifying a transmitting ITS station associated with the second identifier and does not receive another message identifying a transmitting ITS station associated with the first identifier, determining that the first and the second transmitting ITS stations are a same transmitting ITS station.

## Description

### FIELD OF THE INVENTION

The present invention relates generally to Intelligent Transport Systems (ITS) and more specifically to Cooperative Intelligent Transport Systems (C-ITS).

### BACKGROUND OF THE INVENTION

Cooperative Intelligent Transport Systems (C-ITS) is an emerging technology for future transportation management that aims at improving road safety, traffic efficiency and drivers experience.

Intelligent Transport Systems (ITS), as defined by the European Telecommunications Standards Institute (ETSI), include various types of communication such as:
- communications between vehicles (e.g., car-to-car), and
- communication between vehicles and fixed locations (e.g., car-to-infrastructure).

The use of ITSs is not restricted to road transportation as such, as they also include the use of information and communication technologies (ICT) for rail, water and air transportation, including navigation systems.

In general, the various types of ITSs rely on radio services for communication and use dedicated technologies.

ITS standards define a general architecture, specified in ETSI EN 302 665 and ISO 21217, and also define in particular the notion of ITS stations (denoted ITS-S). ITS stations may be any vehicles, Road Side Units (RSU), Vulnerable Road Users (VRU) carrying an ITS equipment (for instance, the ITS equipment may be included in a smartphone, a GPS, a smart watch or in a cyclist equipment), any other entities or infrastructures equipped with an ITS equipment, and central subsystems (back-end systems and traffic management centres).

In order to properly operate, ITSs may support various types of communications, for instance communications between vehicles (vehicle-to-vehicle (V2V), that refers in general to all kinds of road users, e.g., car-to-car) or communications between vehicles and fixed locations (vehicle-to-infrastructure (V2I) and infrastructure-to-vehicle (I2V), e.g., car-to-infrastructure). As ITSs are not restricted to road transportation, ITSs may also support communication comprising information related to rail, water and air transportation.

ITS aims at making vehicles, infrastructure and other users to cooperate using exchange of messages (also called ITS message) between the ITS stations. The ITS messages are not encrypted. Such exchanges of messages are performed through wireless networks, referred to as V2X networks (for "vehicle" to any kind of devices "X"). Examples of Such V2X networks may include 3GPP LTE-Advanced Pro, 3GPP 5G and IEEE 802.11p technology.

In terms of security, a Public Key Infrastructure (PKI) is implemented in order to provide digital certificates to the ITS stations. Although the ITS messages are not encrypted when exchanged over the V2X network, when receiving an ITS message, the receiving ITS station may authenticate the transmitting station based on its digital certificate.

In particular, PKI mechanism ensures the anonymity of the ITS stations within the ITS.

As a matter of fact, the ITS stations are provisioned with a set of pseudonym certificates referred to as authorization tickets (AT) delivered by a certification authority. Thus, when exchanging ITS message within the ITS network, each ITS message, made of a plain text message (not encrypted), is accompanied with a given AT and a digital signature that validate the authenticity of the transmitting ITS station and the integrity of the message. Consequently, the use of the AT and the digital signature ensure the anonymity of the transmitting ITS station that thus uses pseudonyms to exchange within the ITS.

Besides, ATs are regularly changed according to a temporal AT change strategy performed by each ITS station. Therefore, as the change of AT causes the change of the identifier (pseudonym) and the digital signature of the station, a regular change of AT over time make the tracking by the receiving stations very difficult or impossible, in a classic operating mode of the ITS.

However, PKI mechanism alone cannot address all cyber threats. For instance, misbehaving entities in possession of valid certificates can still transmit tampered data.

Consequently, additional security mechanisms need to be deployed at the ITS stations to detect misbehaving entities, also referred to as malicious entities, in order to report them to a Misbehavior Authority (MA). Further, these security mechanisms needs to be compatible with the temporal change of AT of the ITS stations, and need to ensure that conventional ITS stations are not mistaken for malicious stations. Therefore, there is also a need to deploy mechanism to help the receiving ITS station to confirm an AT change under the PKI mechanism of a transmitting ITS station.

### SUMMARY OF INVENTION

The present invention seeks to overcome the foregoing concerns.

In this context, according to a first aspect of the invention, there is provided a processing method of an Intelligent Transport System, ITS, comprising transmitting and receiving ITS stations, the method comprising, at a receiving ITS station:
determining that a first transmitting ITS station associated with a first identifier is located at a first location;
receiving a message indicating that a second transmitting ITS station associated with a second identifier is located at the first location;
and if, during a limited period of time, the receiving ITS station further receives at least one other message identifying a transmitting ITS station associated with the second identifier and does not receive another message identifying a transmitting ITS station associated with the first identifier, determining that the first and the second transmitting ITS stations are a same transmitting ITS station.

Such a method enables a receiving ITS station to determine the change of identifier of a transmitting ITS station, which uses two different identifiers in two messages addressed to the receiving station.

As explained hereinbefore, the ITS stations uses pseudonyms or identifiers (associated to ATs) to exchange messages within the ITS. The regular change of identifier ensures the privacy of the station.

Thus, when the receiving station receives two messages indicating that the transmitting stations are at the same first location, but using different identifiers, this may reflect two situations:
- the two transmitting stations are in fact the same station, that changed its identifier between the sending of the two messages ;
- one of the transmitting station voluntary acts maliciously and gives an erroneous location (a location where another transmitting station is effectively present).

To ensure the station privacy, the change of identifier according to an AT change strategy/policy implies that the station cannot use a previously used identifier.

This way, when the receiving station receives more than one message with the second identifier, this confirms that the transmitting ITS station effectively changes its identifier. The same conclusion is drawn from the non-reception of a message including the first identifier, within a limited period of time.

According to a second aspect of the invention, there is provided a processing method in an Intelligent Transport System, ITS, comprising transmitting and receiving ITS stations, the method comprising, at a receiving ITS station:
determining that a first transmitting ITS station associated with a first identifier is located at a first location;
receiving a first message indicating that a second transmitting ITS station associated with a second identifier is located at the first location;
and, during a limited period of time, receiving a second message identifying a transmitting ITS station associated with the first identifier, thereby determining that the second transmitting ITS station is a malicious ITS station.

As explained, if a transmitting ITS station changes its identifier, for example change the first identifier for a second identifier, then, according to AT change strategy/policy, the ITS station cannot use the first identifier.

As a consequence, when receiving an additional message, indicating a same location, using the first identifier, after a message with the second identifier have been received, the receiving station detects an abnormal behaviour, from a malicious station, that uses the second identifier.

Correspondingly, embodiments of the invention provide a station of an Intelligent Transport System, ITS, the station comprising a processor configured to:
determining that a first transmitting ITS station associated with a first identifier is located at a first location;
receiving a message indicating that a second transmitting ITS station associated with a second identifier is located at the first location;
and if, within a limited period of time the receiving ITS station further receives at least one other message identifying a transmitting ITS station associated with the second identifier and does not receive another message identifying a transmitting ITS station associated with the first identifier, determining that the first and the second transmitting ITS stations are a same transmitting ITS station.

Further, embodiments of the invention provide a station of an Intelligent Transport System, ITS, the station comprising a processor configured to:
determining that a first transmitting ITS station associated with a first identifier is located at a first location;
receiving a first message indicating that a second transmitting ITS station associated with a second identifier is located at the first location;
and, during a limited period of time, receiving a second message identifying a transmitting ITS station associated with the first identifier, thereby determining that the second transmitting ITS station is a malicious ITS station.

The device offers the same advantages as the method described above.

Optional features of embodiments of the invention are defined in the appended claims. Some of these features are explained here below with reference to a method, while they can be transposed into system features dedicated to any device according to embodiments of the invention.

According to some embodiments, the determination may comprise:
receiving a message from a video content analytics module analysing data from a sensor of the receiving station;
processing the message in order to extract the first identifier and location relating to the first transmitting station ITS station.

According to some embodiments, the method may further comprise:
upon the receiving of an additional message indicating that the second transmitting ITS station is associated with the second identifier, incrementing a counter ITS ID change.

According to some embodiments, the method may further comprise:
determining that the first and the second transmitting ITS stations are a same transmitting ITS station when the counter ITS ID change reaches a predetermined value.

According to some embodiments, the limited period of time may be a predetermined period of time.

According to some embodiments, the method may further comprise:
associating the first transmitting ITS station with the second identifier.

According to some embodiments, the method may further comprise:
transmitting an anomaly report comprising the second identifier and comprising a description of an anomaly of the second transmitting station.

According to some embodiments, the received messages may be VRU Awareness Messages, VAM and/or Cooperative Awareness Messages, CAM.

According to some embodiments, the receiving ITS station may be embedded in one among vehicles, Road Side Units, RSU and an ITS equipment of a Vulnerable Road Users, VRU.

According to a third aspect of the invention, there is provided a computer program product for a programmable apparatus, the computer program product comprising a sequence of instructions for implementing a method as described hereinbefore, when loaded into and executed by the programmable apparatus.

According to a fourth aspect of the invention, there is provided a computer-readable storage medium storing instructions of a computer program for implementing a method as described hereinbefore.

### BRIEF DESCRIPTION OF THE DRAWINGS

Further advantages of the present invention will become apparent to those skilled in the art upon examination of the drawings and detailed description. Embodiments of the invention will now be described, by way of example only, and with reference to the following drawings, in which:
**Figure 1** illustrates a typical Intelligent Transportation Systems (ITS) in which embodiments of the invention may be implemented;
**Figure 2** illustrates security mechanisms implemented in an ITS;
**Figure 3** shows a schematic representation of the architecture of an ITS station according to embodiments of the present invention;
**Figure 4** describes, using flowcharts, steps of a processing method for detecting a malicious vehicle according to embodiments of the present invention;
**Figure 5** illustrates the detection of an ITS Identifier change according to embodiments of the present invention; and,
**Figure 6** illustrates the detection of a malicious vehicle according to embodiments of the present invention.

### DETAILED DESCRIPTION

The names of the lists and elements (such as data elements) provided in the following description are only illustrative. Embodiments are not limited thereto and other names could be used.

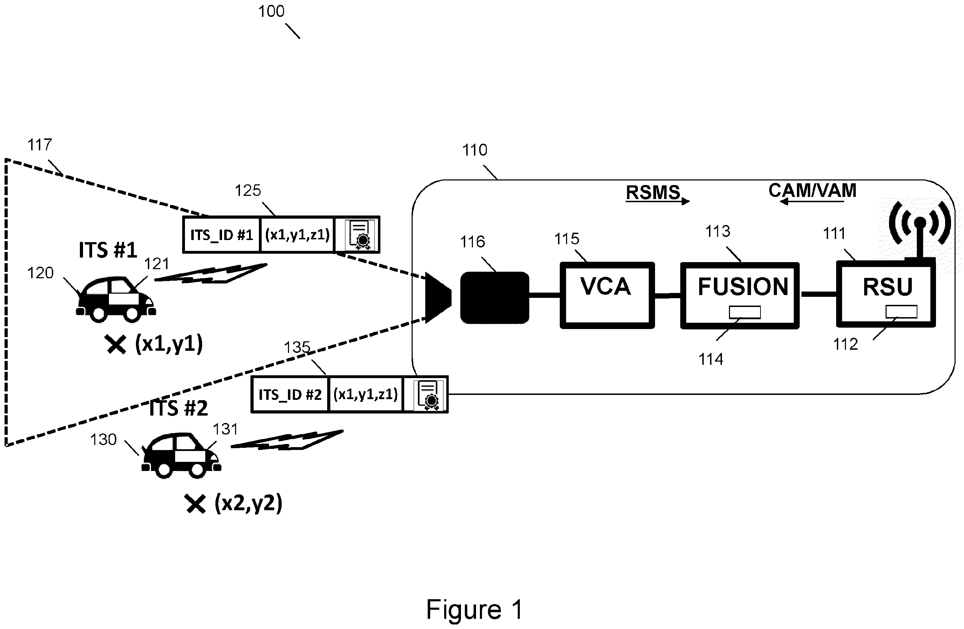

The embodiments of the present invention are intended to be implemented in an Intelligent Transportation Systems (ITS). An example of such a system 1000 is illustrated in **Figure 1****.**

In this example, the ITS comprises a fixed road side entity 110 and two vehicles 120 and 130. The vehicles 120 and 130 included in an ITS are also referred to ITS vehicle. In order to ensure the cooperation within the ITS, the two vehicles 120 and 130 include respectively a Vehicle ITS Station (V-ITS-S) 121,131 and the fixed road side entity 110 contains a Roadside ITS Station (R-ITS-S) 112 included in a Road Side Unit (RSU) 111. The architecture of the ITS stations (V-ITS-S and R-ITS-S) is defined in the version V1.1.1 of the ETSI EN 302 665 specification.

Cooperation within the ITS 100 is achieved by the exchange of specific messages, also called ITS messages, among these ITS stations. The exchange of ITS messages is performed using wireless networks, called V2X networks, examples of which may include 3GPP LTE-Advanced Pro, 3GPP 5G and IEEE 802.11p technology. ITS messages enable the ITS stations to share information, alerts in order to warn and/or inform the vehicles and users. For the sake of clarity, in the subsequent description, an ITS station that sends an ITS message is referred to below as a transmitting ITS station while an ITS station that receives an ITS message is referred to below as a receiving ITS station. Since an ITS station may be configured to send and receive ITS messages, an ITS station may be both a transmitting ITS station and a receiving ITS station.

To secure V2X communications within ITS 100, a Public-Key-Infrastructure (PKI) (e.g., as defined in the version 1.1.1 of the ETSI TS 102 731 specification) may be used. PKI provides security and verification and thus enables the receiving station to determine whether it should trust the transmitting ITS station. The PKI based mechanism implemented in ITS is adapted in order to comply General Data Protection Regulation (GDPR) and to protect the privacy of the users of the system.

The privacy may be ensured within the PKI mechanism thanks to the two following principles:
- Pseudonymity ensuring that an ITS station may use a resource or service without disclosing its identity but can still be accountable for that use;
- Unlinkability ensuring that the greater the distance in time and space between two transmissions from a same device, the harder it is to determine that those two transmissions did in fact come from the same device.

Thus, ITS messages exchanged within the ITS comprise a plain text message accompanied with a Digital Signature and a Pseudonym Certificate that validate together the authenticity of the transmitting ITS station and the integrity of the message, while keeping anonymity of the transmitting ITS station.

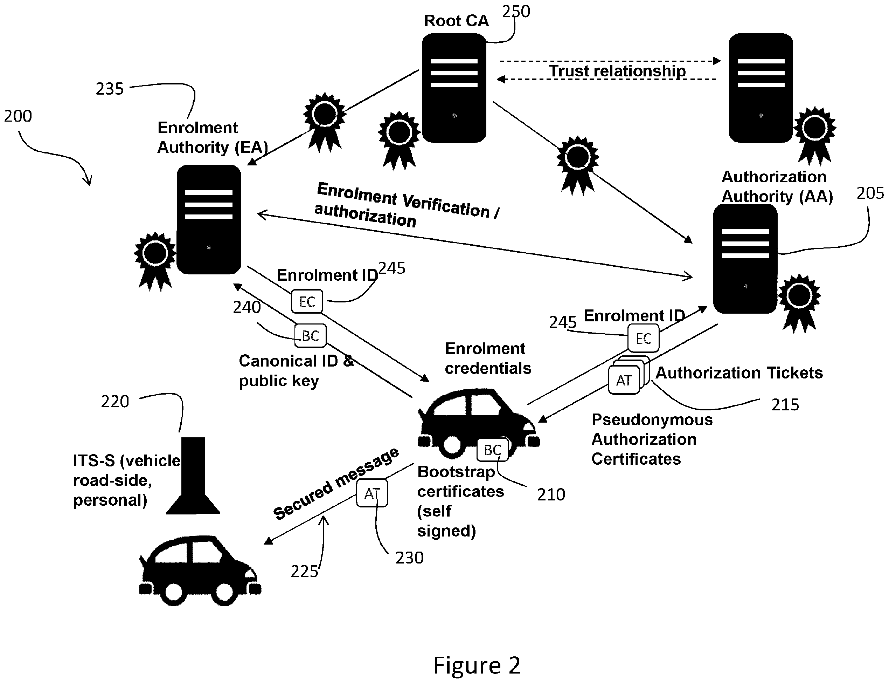

An example of a PKI-based mechanism 200 is illustrated in Figure 2. The PKI-based security is implemented through the use of certificates delivered by a certification authority to the ITS stations.

As part of the ITS station manufacturing process, a set of information elements 240 associated with the identity of the ITS station is established by the Enrolment Authority (EA) 235 as defined in the version 1.2.1 of the ETSI TS 102 941 specification. The set of information elements 240 is then registered within the ITS station and the EA.

As an example, the set of information elements 240 may comprise:
- A canonical identifier: it is an identifier that uniquely identify the ITS station. In other words, the canonical identifier is the ITS station identity.
- A public/private key pair for cryptographic purpose based on PKI mechanism.

Based on this set of information elements, the EA generates an Enrolment Certificate 245 which comprises a pseudonym provided to the ITS station during the enrolment process. The pseudonym is used for anonymity and is referred to as Enrolment Identity (Enrolment ID).

Next, after having enrolled with the EA, the ITS station requests an Authorization Authority (AA) for specific services and permission within the EA's domain and AA's Authorization context. In particular, the AA checks the Enrolment Certificate 245 included in the request (more specifically, the AA checks the Enrolment ID included in the Enrolment Certificate. Then, if the Enrolment Certificate is suitable, the AA may provide multiple pseudonym certificates referred to as Authorization Tickets (AT) 215. Each AT 215 includes a pseudonym of the ITS station to be used in V2X communication, to ensure its privacy when interacting within the ITS network. Each pseudonym certificate is delivered by a Certification Authority 250. Thus, each ITS station is required to obtain specific credentials from dedicated certification authorities in order to access the ITS network and to use of the available ITS application, services and capabilities, such as sending ITS messages.

From this security procedure, a ITS station selects an authorization ticket among its available multiple authorization tickets 215 for a given period, before switching to another authorization ticket (not previously used) in order to prevent the linkability. Each ITS message 225 sent during the given period included the selected authorization ticket 230 and the pseudonym ITS identifier corresponding to the selected authorization ticket is also indicated in the header of the ITS message 225.

When receiving a message 225, the receiving ITS station 220, verifies the Authorization Ticket 230 that ensures that the transmitting ITS station 210 has the privileges and authorizations to transmit specific ITS messages 225.

Several types of messages are specified in the ITS standard. One of them is called the Cooperative Awareness Message (CAM as defined in the version 1.3.1 of the ETSI EN 302 637-2 specification), is used by the ITS transmitting stations to share information about themselves with the other stations of the ITS network. As an example, the shared information, that may be called ITS information, may be related to their current station (position, speed, length, width, angle, etc.), operational status (ON/OFF), operational problem, etc. Another type of message, called Vulnerable Road Users Awareness Message (VAM), defined in the standard ETSI TS 103 300-2 (version V0.4.2), is dedicated to Vulnerable Road Users (VRU), such as pedestrians, cyclists as well as motorcyclists and also persons with disabilities or reduced mobility and orientation, carrying an ITS equipment. Such ITS equipment may be for instance included in a smartphone, a GPS, a smart watch or in a cyclist equipment, etc. Typically, VAM is used by VRU to advertise a list of information relative to the current state of its VRU ITS station (VRU ITS-S), such as its position, type, size, weight, speed, direction or orientation, to other ITS stations of the ITS network. The rest of the description is detailed in relation to CAM but it may be applied to VAM.

To return to the example of the ITS 100 illustrated in Figure 1, within the ITS 100, the position of the ITS stations 120, 130 are determined by themselves, for example, using the absolute geographical coordinates given by using the WGS84 coordinate system as defined in ETSI TS 102 894-2. Thus, each ITS station may determine its latitude (x), its longitude (y) and its altitude (z) in the WGS84 coordinate system. In the illustrated example, the ITS vehicle 120 is located at the position (x1,y1,z1) and the ITS vehicle 130 is located at the position (x2,y2,z2), with x1, x2 corresponding to their latitude, y1, y2 to their longitude and z1, z2 to their altitude.

The ITS vehicle 120 sends periodically CAMs 125 to share its position (x1,y1,z1) to the other ITS stations using a pseudonym ITS identifier referred to as ITS_ID#1. As explained hereinbefore, in order to prevent the linkability, after a given period, the ITS vehicle 120 may decide to change its authorization ticket, i.e. its pseudonym ITS identifier ITS_ID#1, and use a new one for which a new pseudonym ITS identifier is associated referred to as ITS_ID#3.

In the illustrated example, the ITS vehicle 130 is a "misbehavior" vehicle or a "malicious" vehicle. As a matter of fact, instead of sending its true position (x2,y2,z2) within the periodically sent CAM, the ITS vehicle 130 is signaling the position (x1,y1,z1) using a pseudonym ITS identifier referred to as ITS_ID#2.

In this example, CAMs 125 and 135 are received by RSU 111 included in the fixed road side entity 110. The RSU 111 forwards CAMs 125 and 135 to an interconnection module 113 to which it is wire-connected.

Road side entity 110 also includes a set of sensors, such as image sensors here a video camera 116 and a Video Content Analytics (VCA) module 115. The video camera 116 is configured to scan the area 117, and thus reproduced images of the area 117.The video camera 116 and VCA module 115 are connected so that the VCA module 115 processes the stream captured by the sensors/video camera 116. The VCA may be embedded in the road side entity 110 and wire-connected to the video camera 116 that may be a remote one (i.e. not embedded in the road side entity 110). The processing by the VCA module 115 aims at detecting objects potentially present in area 117, referred to as "perceived objects" hereinafter. The VCA module 115 is also configured to output a list of the perceived objects respectively associated with corresponding description information referred to as state vector. The state vector may include for instance parameters as position, speed, acceleration, classification, etc.

The list of the perceived objects is then encoded into messages referred to as Road Side Monitoring System (RSMS) messages. VCA module 115 is wire-connected to the interconnection module 113 and sends RSMS messages to it via its wired connection.

In the illustrated example, by scanning the area 117, VCA module 115 has captured a perceived object corresponding to the ITS vehicle 120 at the position (x1,y1,z1). Consequently, it sends a RSMS message including a list in which a perceived object relative to the ITS vehicle 120 is described, in which the state vector of the vehicle 120 containing for instance the position (x1,y1,z1).

The interconnection module 113 may include a sensor data fusion module 114. The sensor data fusion module 114 processes both the objects corresponding to CAM received from RSU 111 and perceived objects included into RSMS messages received from VCA module 115 in order to identify a misbehavior vehicle.

If inconsistencies are identified, the sensor data fusion module 114 may generate an anomaly report indicating the ITS identifier of the malicious vehicle, ITS_ID#2, and optionally the corresponding proofs (such as its authorization ticket) and the description of the misbehavior/anomaly (wrong position, ghost position). The anomaly report may be sent to a Misbehavior Authority (MA) via RSU 111.

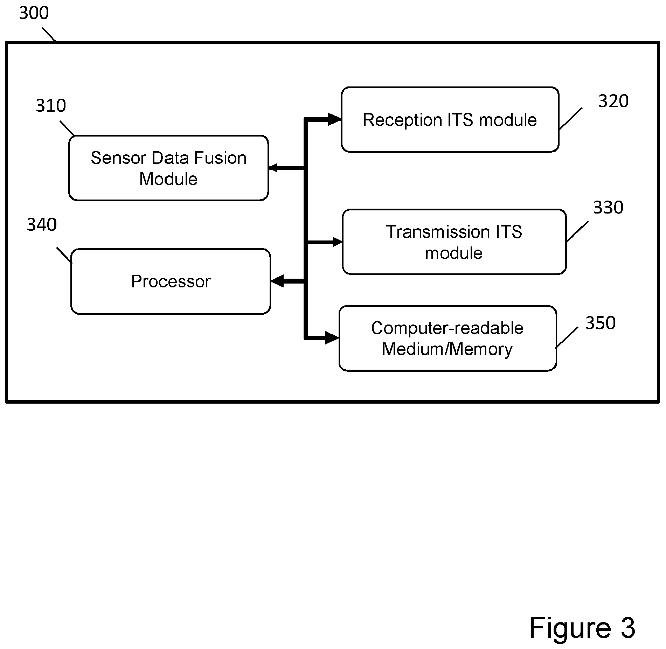

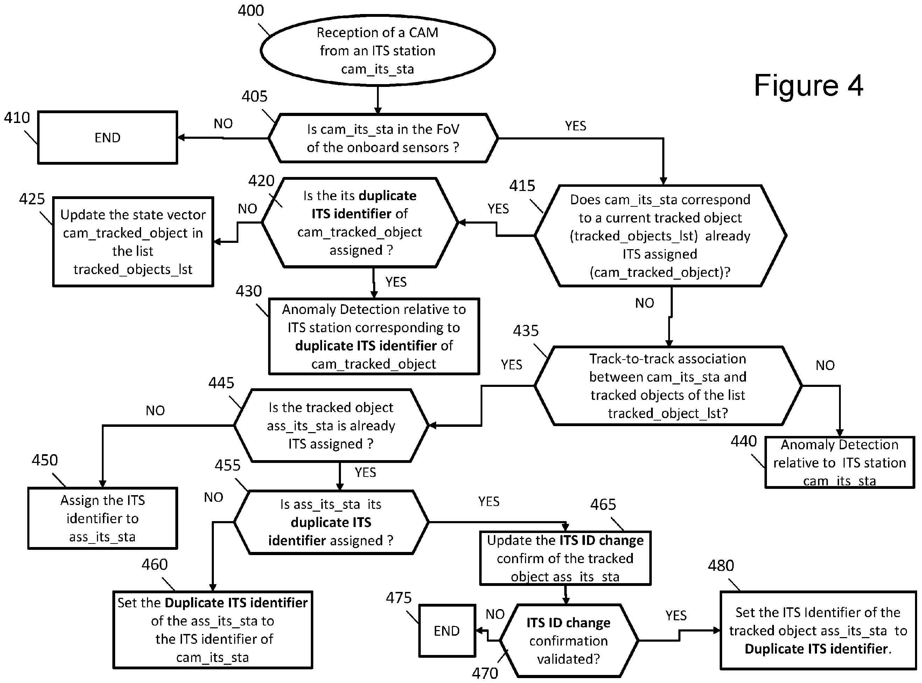

An example of a sensor data fusion module 114 is described with reference to Figure 3 which illustrates a schematic representation of the architecture of entity 300 included in an ITS station. The entity comprises the modules required to implement embodiments of the invention and in particular the sensor data fusion module (module 114 with reference to Figure 1) configured to perform the steps described with reference to **Figure 4****.**

The entity 300 includes a sensor data fusion module 210, a reception ITS module 320, a transmission ITS module 330, a processor module 340 and a computer-readable medium/memory 350.

The reception ITS module 320 receives ITS messages (as CAM or VAM) and decodes them by extracting ITS information. It may also perform security checks on the received ITS messages as checking their consistency, plausibility and integrity (using security protocols integrated in the PKI mechanism). The reception ITS module may also either destroy or store the received messages according to previous operations results. Moreover, the reception ITS module receives RSMS messages and decodes them by extracting information provided by the VCA.

The transmission ITS module 310 encodes and transmits ITS messages as an anomaly report.

The sensor data fusion module 310 is described with reference to figure 4. It interacts with other modules 220, 230, 240 and 250 when operating.

The processor 340 is responsible for global processing, including the execution of the software stored on the computer-readable Medium/Memory 250. In particular, the software implements the methods described in the present disclosure with reference to **Figure 4****,** described hereinafter. The computer-readable Medium/Memory 250 may also be used for storing data that is used by the processor 240 when executing software.

Each module 210, 220, 230 may be implemented as a specific circuit or as a software module stored in memory 245 and executed by the processor 240.

**Figure 4** is a flowchart describing steps of a processing method for running a sensor data fusion module according to embodiments of the present invention. The processing method is intended to be performed by the sensor data fusion module 114 as illustrated with reference to Figure 1.

The present processing method manages a list of tracked objects, referred to as tracked_object_lst. As explained before, the list of tracked objects comprises all the perceived objects relative to the ITS station including the sensor data fusion module 114, associated with the state vector of each tracked object.

According to some embodiments, each tracked object is characterized by the following parameters:
- a RSMS identifier: the RSMS identifier corresponds to an identifier given by the RSMS/VCA (115) for each perceived object;
- a ITS identifier : in the case where the perceived object has the same position as a station from which a CAM have been received, the ITS identifier corresponds to the Data Element StationID (DE_StationID) contained in the ITS PDU Header of the message CAM. The DE_StationlD corresponds to the pending pseudonym of the transmitting ITS station in the ITS system. In the case where the object is only detected with the RSMS/VCA (i.e., is not detected using a received CAM), the ITS identifier is set to zero.
- a last update parameter: it is the time of the last update of the tracked object of the list. The update may be triggered by the reception of a CAM or a RSMS Message or via an interpolation done internally by the present processing method.
- a state vector: it may comprise a list of parameters such as position, speed, class or direction.
- a duplicate ITS identifier: the duplicate ITS identifier is only activated and set when an ITS message is received from a given ITS station for which its state vector corresponds to the state vector of another ITS station already associated to a tracked object of the list tracked_object_lst. In such a case, the duplicate ITS identifier is set to the ITS identifier of the given ITS station.
- an ITS ID change parameter: the ITS ID change parameter is a counter at the end of which the change of the pseudonym ITS identifier of an ITS station is confirmed before a definitive validation. The confirmation is obtained when the counter reaches a predetermined value, e.g., 3.

During normal operation, when the sensor data fusion module 114 receives a RSMS message from VCA module 115, the sensor data fusion module 114 processes the RSMS message and decodes it in order to extract the list of perceived objects with their current state vector.

Each extracted perceived object is processed in order to update the list of tracked_object_lst. In particular, the update may consist in instantiating a new tracked object corresponding to the extracted perceived object or updating the tracked object (the parameters last update parameter and state vector) corresponding to the perceived object.

The processing method, described in reference to Figure 4, enables the sensor data fusion module 114 to detect malicious vehicle, as the one 130 illustrated in Figure 1, while dealing with the change of pseudonym ITS identifier of the ITS stations in order to ensure privacy.

When a receiving ITS station (included for example in the fixed road side entity 110 illustrated in Figure 1 or associated to a vehicle) receives a CAM (step 400) from another transmitting ITS station, referred to as cam_its_sta, the sensor data fusion module checks whether the transmitting ITS station cam_its_sta is located in the scanning area 117 of the video camera (step 405). In other words, the sensor data fusion module checks whether RSMS messages previously received or that may be received may comprise information relating to the transmitting ITS station cam_its_sta.

According to some embodiments, in order to determine if the transmitting ITS station cam_its_sta is in the scan area 117, the sensor data fusion module may implement computational geometry algorithms well known by the state of art. For instance, a ray -crossingalgorithm may be used.

If the transmitting ITS station cam_its_sta is not in the scan area 117, then the algorithm stops (step 410). As a matter of fact, in this case, there is no additional information from the VCA regarding the transmitting ITS station cam_its_sta. Consequently, no inconsistencies may be detected using the additional information of the VCA.

Otherwise, the sensor data fusion module checks, at step 415, whether the transmitting ITS station cam_its_sta corresponds to a currently tracked object, using their ITS identifiers.

More precisely, at step 415, the sensor data fusion module determines whether there is a tracked object in the list tracked_object_lst which has its parameter ITS identifier equal to the ITS identifier of the transmitting ITS station cam_its_sta. As a reminder, the ITS identifier of transmitting ITS station cam_its_sta corresponds to the Data Element StationID contained in the ITS PDU Header of the received CAM.

If there is a match in the list tracked_object_lst, then the found tracked object is referred to as cam_tracked_object. Next the step 420 is performed. If there is no match, then the step 435 is performed.

At step 420, the sensor data fusion module checks whether the duplicate ITS identifier of the tracked object cam_tracked_object is assigned or not. In other words, the sensor data fusion module checks whether a duplicated ITS identifier of the cam_tracked_object has been activated. As a reminder, the duplicate ITS identifier is only activated and set when an ITS message is received from a given ITS station for which its state vector corresponds to the state vector of the cam_tracked_object already associated to a tracked object of the list tracked_object_lst. In such a case, the duplicate ITS identifier is set to the ITS identifier of the given ITS station.

This step 420 aims at determining whether a possible station (with an ITS identifier different from the one of the cam_tracked_object) which transmitted a position which is the same as the cam_tracked_object is a malicious station or corresponds to the cam_tracked_object which changed its ITS identifier.

The principle is as follows: when for reasons related to privacy, a station changes its ITS identifier, it can no longer use a former ITS identifier. The duplicate identifier is used to initially indicate that two identical positioning information have been received with different ITS identifiers, a first and a second ITS identifier.

As a consequence, if the first ITS identifier is reused, this means that there has been no change of the ITS identifier of a station, and therefore that the message received with the second ITS identifier is erroneous or comes from a malicious station (which transmits a wrong position).

Thus, if in step 420 it is determined that there is a duplicate ITS identifier, while in step 415, the ITS identifier of the transmitting ITS station cam_its_sta is equal to the ITS identifier of a station in the list tracked_object_lst, then at step 430 it is determined that the duplicate ITS identifier of cam_tracked_object corresponds to a malicious station.

At step 430, a misbehavior/anomaly relative to an ITS station is thus detected. The malicious ITS station is identified by an ITS identifier equal to the duplicate ITS identifier of cam_tracked_object. An anomaly report may then be generated indicating that the duplicate ITS identifier is associated to a malicious vehicle. The anomaly report may further include the description of the anomaly such as the description a wrong position (ITS station advertises a position wherein there is another vehicle).

If at step 420, no duplicated ITS identifier has been detected, thus at step 425, the state vector of the tracked object cam_tracked_object is updated with the values contained in the received CAM.

According to some embodiments, the updating may be performed using a Kalman filter and the values contained in CAM being considered as the new measurements of the filter.

In the case where there is no match in the list tracked_object_lst with the ITS identifier of the transmitting ITS station cam_its_sta at step 415, then the step 435 is performed.

Step 435 operates a track-to-track association between the transmitting ITS station cam_its_sta and the elements of the list tracked_object_lst in order to possibly associate the transmitting ITS station cam_its_sta with a tracked object.

To do so, according to some embodiments, a distance is evaluated between the transmitting ITS station cam_its_sta, and the tracked objects in the list tracked_object_lst.

According to some embodiments, the evaluation of the distance (Euclidean or Mahalanobis) involves the common features within the state vector of the tracked objects and the received message CAM corresponding to the transmitting ITS station cam_its_sta. The common features may comprise the position, the speed and the class (i.e. the classification of the ITS station, e.g. whether the ITS station is a vehicle, a VRU, or a RSU, etc.). Next, according to some embodiments, a nearest neighbor algorithm is applied in order to identify a potential association. Such algorithms are well known by the state of the art.

When there is no match, an anomaly/misbehavior relative to the transmitting ITS station cam_its_sta is generated at step 440. As a matter of fact, as checked at step 405, the transmitting ITS station cam_its_sta is positioned in the scanning area 117, and should be detected by the VCA. If the transmitting ITS station cam_its_sta is not detected by the VCA, this means that the position in the CAM message is erroneous. An anomaly report may then be generated indicating that the ITS station cam_its_sta is a malicious vehicle. Besides, the associated anomaly may indicate as description a ghost position, i.e., that the ITS station advertises a position wherein there is no vehicle.

When there is a match between the transmitting ITS station cam_its_sta and a tracked object of the list tracked_object_lst, the corresponding tracked object is referred to as ass_its_sta, and step 445 is then performed.

At step 445, it is checked whether the tracked object ass_its_sta is already ITS assigned. In other words, it is determined, whether the ITS Identifier of the tracked object ass_its_sta is set with information provided by a previously received CAM.

If no ITS identifier is set, then at step 450, the ITS identifier of the tracked object ass_its_sta is set to the ITS identifier of the ITS station cam_its_sta.

If an ITS identifier is set, this means that two identifiers are associated with a same positioning. As a consequence, at step 455, it is checked whether the duplicate ITS identifier of the track object ass_its_sta is already assigned or not.

In the case where no duplicate ITS identifier is set, then at step 460, the duplicate ITS identifier of the tracked object ass_its_sta is set to the ITS identifier of the transmitting ITS station cam_its_sta. Moreover, its ITS ID change confirm parameter is initialized to 1 in order to launch a counter at the end of which the change of the pseudonym ITS identifier of the ass_its_sta will be confirmed before a definitive validation.

In the case where a duplicate ITS identifier is set and is equal to the ITS identifier of the transmitting ITS station cam_its_sta, then at step 465, the ITS ID change confirm parameter of the tracked object ass_its_sta is incremented.

Next, at step 470, it is checked whether the value of the ITS ID change confirm parameter reaches a given threshold, referred to as ITS ID change threshold. When the ITS ID change confirm parameter reaches the threshold, the validation of the change of ITS identifier is confirmed. According to some embodiments, the ITS ID change threshold is set to a fixed value stored in readable Medium/Memory 250 and it is not modifiable. As an example, a typical value for the ITS ID change confirm parameter is 3.

If the threshold is not reached, the algorithm stop, at step 475.

If the threshold is reached, then, at step 480, the ITS Identifier of the tracked object ass_its_sta is set to the value of the duplicate ITS identifier.

In other words, this means that the ITS station cam_its_sta corresponding to tracked object ass_its_sta has changed its authorization ticket and its corresponding pseudonym ITS identifier that now corresponds to duplicate ITS identifier to ensure the station privacy.

Thus, the illustrated embodiment of the processing method may be used in order to identify an ITS identifier change, or to detect malicious vehicles. In a more general terms, the processing method enables the sensor data fusion module to deal with the privacy requirements while ensuring the station security.

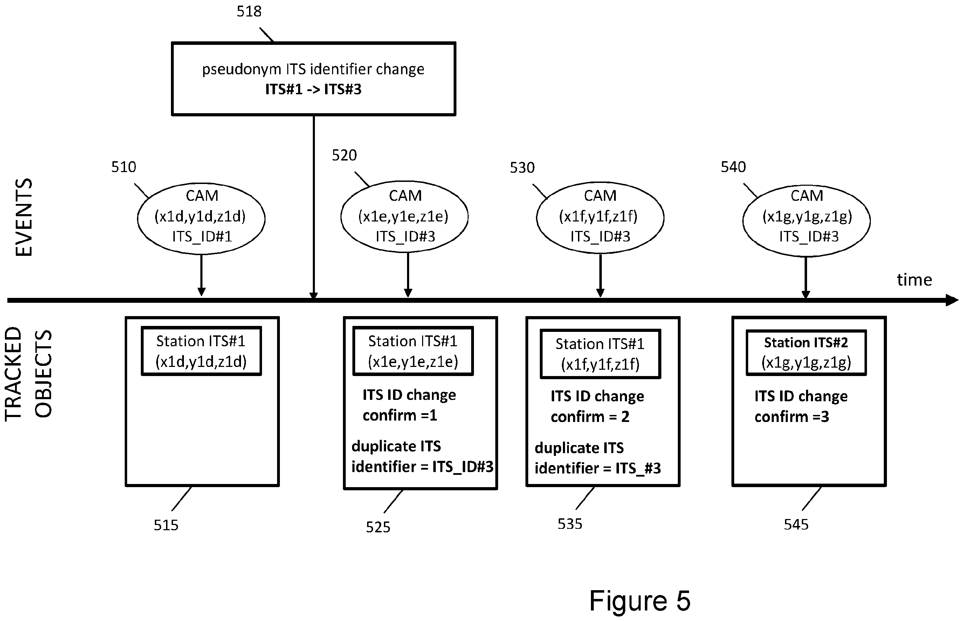

**Figure 5** illustrates an example of the processing method applied for the detection of a change of ITS Identifier, according to embodiments of the present invention.

The illustrated example refers to Figure 1, and corresponds to the change of the authorization ticket operated by the ITS vehicle 120. The change of authorization ticket results in a change of the pseudonym of the vehicle 120 ITS identifier from ITS_ID#1 to ITS_ID#3.

First, at step 510, the ITS vehicle 120 sends a CAM 125 to share its position (x1d,y1d,z1d) to the other ITS stations. As the CAM 125 is sent before the change of pseudonym, the ITS vehicle 120 uses the first pseudonym ITS identifier ITS_ID#1.

At step 515, the CAM 125 is received by the RSU 111. The RSU, which may be wire-connected to the interconnection module 113, transmits the CAM to the sensor data fusion module 114, included in the interconnection module 113. According to embodiments described in Figure 4, the sensor data fusion module 114 processes the received CAM, and performs steps 400-405-415-420 and 425.

At step 518, the ITS vehicle 120 changes its pseudonym ITS identifier from ITS_ID#1 to ITS_ID#3.

At step 520, the ITS vehicle 120 sends a CAM 125 to share its position (x1e,y1e,z1e) to the other ITS stations. As a consequence, in the CAM, the new pseudonym of the ITS vehicle 120, ITS identifier ITS_ID#3, is used.

At step 525, the CAM 125 is received by the sensor data fusion module 114 which processes the received CAM, e.g. as described in Figure 4.

In particular, the sensor data fusion module 114 may performs steps 400-405-415-435-445-455 and 460 of Figure 4.

Thus, the sensor data fusion module 114 identifies that a tracked object with the ITS identifier ITS_ID#1 corresponds to a position indicated in the received CAM 125. But the received CAM 125 is not sent not by the ITS station identified by ITS_ID#1 "as expected" but by a station identified by ITS_ID#3.

Consequently, the duplicate ITS identifier of the tracked object with the ITS identifier ITS_ID#1 is set to ITS_ID#3 and its ITS ID change confirm parameter may be initialized to "1".

At step 530, the ITS vehicle 120 sends an additional CAM 125 to share its position (x1f,y1f,z1f) to the other ITS stations by using its pseudonym ITS identifier ITS_ID#3.

At step 535, the CAM 125 is received by the sensor data fusion module 114. The sensor data fusion module then processes the received CAM 125 and may perform steps 400-405-415-435-445-455-465-470 and 475 of Figure 4.

In particular, the ITS ID change confirm parameter of the tracked object with the ITS identifier ITS_ID#1 (for which the duplicate ITS identifier is set to ITS_ID#3) is updated to "2".

In the illustrated example, the ITS ID change threshold is set to a fixed value that may be equal to "3". Since the threshold is not reached, the algorithm stop (step 475).

At step 540, the ITS vehicle 120 sends a CAM (125) to share its position (x1fgy1g) to the other ITS stations by using its pseudonym ITS identifier ITS_ID#3.

At step 540, the CAM 125 is received by the sensor data fusion module 114 which processes CAM as described in Figure 4. In particular, the sensor data fusion module 114 may perform steps 400-405-415-435-445-455-465-470 and 480.

In particular, the ITS ID change confirm parameter of the tracked object with the ITS identifier ITS_ID#1 (for which the duplicate ITS identifier is set to ITS_ID#3) is updated to "3".

The ITS ID change threshold is then reached.

As a consequence, the ITS identifier of the tracked object with the ITS identifier ITS_ID#1 is modified and updated to value ITS_ID#3 considering that the corresponding ITS station changed its pseudonym ITS identifier (from ITS_ID#1 to ITS_ID#3). Thus, after a limited period of time, when the threshold reaches "3", there is confirmation of the change of ITS identifier.

According to some embodiments, steps 530, 535, 540 and 545 may be replaced by a unique step. The step consists in determining, after receiving a second message with a second identifier, whether, during limited period of time which is a predetermined period of time, the ITS station further receives at least one other message identifying a transmitting ITS station associated with the second identifier and does not receive another message identifying a transmitting ITS station associated with the first identifier.

In this case, it may be concluded that the ITS first station has changed its identifier, and thus the ITS identifier of the tracked object with the ITS identifier ITS_ID#1 is modified and updated to the new value ITS_ID#3.

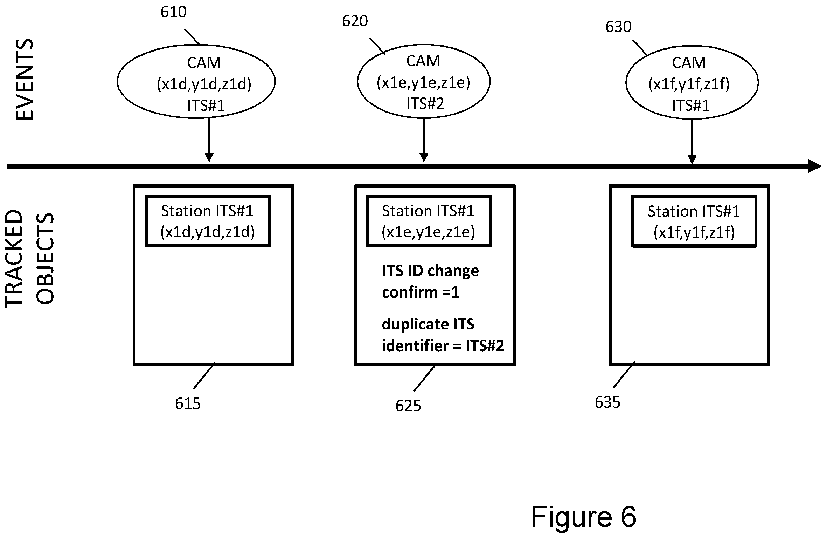

**Figure 6** illustrates the detection of a malicious vehicle according to embodiments of the present invention.

The illustrated example refers to Figure 1, and corresponds to the malicious ITS vehicle 130 signaling a false position in CAM 135 instead of its true position.

At step 610, the ITS vehicle 120 sends a CAM 125 to share its position (x1d,y1d,z1d) to the other ITS stations by using its pseudonym ITS identifier ITS_ID#1.

At step 615, the CAM 125 is received by the RSU 111. The RSU, which is wire-connected to the interconnection module 113, transmits the CAM to the sensor data fusion module 114, included in the interconnection module 113. Accordingly to embodiments described in Figure 4, then the sensor data fusion module 114 may process the received CAM, and perform steps 400-405-415-420 and 425 of Figure 4.

At step 620, the ITS vehicle 130 sends a CAM 135 to share the false position (x1e,y1e,z1e) to other ITS stations by using its pseudonym ITS identifier ITS_ID#2.

At step 625, the CAM 135 is received by the sensor data fusion module 114. More precisely, the sensor data fusion module 114 may process the CAM 135 as described in Figure 4. Thus, steps 400-405-415-435-445-455- and 340 may be performed.

In particular, the sensor data fusion detects that a tracked object with the ITS identifier ITS_ID#1 corresponds to the position indicating in received CAM 125. But the received CAM 125 is not sent not by the ITS station of identified by ITS_ID#1 "as expected" but a station identified by ITS_ID#2.

Consequently, the duplicate ITS identifier of the tracked object with the ITS identifier ITS_ID#1 is set to ITS_ID#2 and its ITS ID change confirm parameter is initialized to 1.

At step 630, ITS vehicle 120 sends a CAM (125) to share its position (x1f,y1f,z1f) to other ITS stations by using its pseudonym ITS identifier ITS_ID#1.

As explained before, when a station changes its pseudonym, the station is forbidden to use a former pseudonym for a given period of time, typically 1 hour. As a consequence, the reuse of the ITS identifier ITS_ID#1 can only mean one thing: the station did not change its ITS identifier, and as a consequence the received message comes from a malicious station.

At step 635, CAM 135 is received by the sensor data fusion module 114. More precisely, the sensor data fusion module 114 processes the CAM as described in Figure 4 and performs the steps 400-405-415-420 and 430.

Thus, an anomaly/misbehavior relative to ITS station pseudonym ITS identifier ITS_ID#2 is detected, the ITS_ID#2 corresponding to the duplicate ITS identifier of the tracked object with the ITS identifier ITS_ID#1.

This means that the ITS station corresponding to the ITS identifier ITS_ID#1 did not change its authorization ticket and consequently ITS station identified with pseudonym ITS identifier ITS_ID#2 is malicious.

## Claims

1. A processing method of an Intelligent Transport System, ITS, comprising transmitting and receiving ITS stations, the method comprising, at a receiving ITS station:
determining that a first transmitting ITS station associated with a first identifier is located at a first location;
receiving a message indicating that a second transmitting ITS station associated with a second identifier is located at the first location;
and if, during a limited period of time, the receiving ITS station further receives at least one other message identifying a transmitting ITS station associated with the second identifier and does not receive another message identifying a transmitting ITS station associated with the first identifier, determining that the first and the second transmitting ITS stations are a same transmitting ITS station.

2. A processing method in an Intelligent Transport System, ITS, comprising transmitting and receiving ITS stations, the method comprising, at a receiving ITS station:
determining that a first transmitting ITS station associated with a first identifier is located at a first location;
receiving a first message indicating that a second transmitting ITS station associated with a second identifier is located at the first location;
and, during a limited period of time, receiving a second message identifying a transmitting ITS station associated with the first identifier, thereby determining that the second transmitting ITS station is a malicious ITS station.

3. The method of claim 1 or 2, wherein the determination comprises:
receiving a message from a video content analytics module analysing data from a sensor of the receiving station;
processing the message in order to extract the first identifier and location relating to the first transmitting station ITS station.

4. The method of claim 1, wherein the method further comprises:
upon the receiving of an additional message indicating that the second transmitting ITS station is associated with the second identifier, incrementing a counter ITS ID change.

5. The method according to claim 4, wherein the method further comprises:
determining that the first and the second transmitting ITS stations are a same transmitting ITS station when the counter ITS ID change reaches a predetermined value.

6. The method according to claim 1 or 2, wherein the limited period of time is a predetermined period of time.

7. The method according to claim 1, wherein the method further comprises:
associating the first transmitting ITS station with the second identifier.

8. The method according to claim 2, wherein the method further comprises:
transmitting an anomaly report comprising the second identifier and comprising a description of an anomaly of the second transmitting station.

9. The method according to any of the claims 1 to 8, wherein the received messages are VRU Awareness Messages, VAM and/or Cooperative Awareness Messages, CAM.

10. The method according to any of claims 1 to 9, wherein the receiving ITS station is embedded in one among vehicles, Road Side Units, RSU and an ITS equipment of a Vulnerable Road Users, VRU.

11. A station of an Intelligent Transport System, ITS, the station comprising a processor configured to:
determining that a first transmitting ITS station associated with a first identifier is located at a first location;
receiving a message indicating that a second transmitting ITS station associated with a second identifier is located at the first location;
and if, within a limited period of time the receiving ITS station further receives at least one other message identifying a transmitting ITS station associated with the second identifier and does not receive another message identifying a transmitting ITS station associated with the first identifier, determining that the first and the second transmitting ITS stations are a same transmitting ITS station.

12. A station of an Intelligent Transport System, ITS, the station comprising a processor configured to:
determining that a first transmitting ITS station associated with a first identifier is located at a first location;
receiving a first message indicating that a second transmitting ITS station associated with a second identifier is located at the first location;
and, during a limited period of time, receiving a second message identifying a transmitting ITS station associated with the first identifier, thereby determining that the second transmitting ITS station is a malicious ITS station.

13. A computer program product for a programmable apparatus, the computer program product comprising a sequence of instructions for implementing a method according to any one of claims 1 to 10, when loaded into and executed by the programmable apparatus.

14. A computer-readable storage medium storing instructions of a computer program for implementing a method according to any one of claims 1 to 10.
